# EUROPEAN PATENT SPECIFICATION

(11) **EP 4 343 810 B1**
(45) Date of publication and mention of the grant of the patent: **15.07.2026**
(21) Application number: 22306380.1
(22) Date of filing: 21.09.2022
(51) Int. Cl.: H01H 85/47, H01H 85/20, H01H 85/047, H01H 85/10, H02H 9/02, H01H 85/11

(54) **IMPROVED POWER FUSE AND AIRCRAFT COMPRISING SUCH A POWER FUSE**
VERBESSERTE STROMSICHERUNG UND FLUGZEUG MIT SOLCH EINER STROMSICHERUNG
FUSIBLE DE PUISSANCE AMÉLIORÉ ET AÉRONEF COMPRENANT UN TEL FUSIBLE DE PUISSANCE

(43) Date of publication of application: 27.03.2024
(73) Proprietor: Airbus SAS, 31700 Blagnac (FR)
(72) Inventor: YBANEZ, Ludovic, 31700 BLAGNAC (FR); SURAPANENI, Ravi Kiran, 31700 BLAGNAC (FR); GALLA, Gowtham, 31700 BLAGNAC (FR)
(74) Representative: Cabinet Le Guen Maillet

(56) References cited:
- DE-A1- 19 846 349
- JP-A- 2000 268 700
- JP-A- S6 439 230
- RU-C1- 2 770 419
- US-A1- 2008 190 646

## Description

### TECHNICAL FIELD

The present invention relates to a cryogenic fuse for opening an electrical circuit. The invention relates more particularly to a cryogenic fuse for power circuits of an electrically propelled aircraft.

### RELATED ART

Liquid hydrogen is a cryogenic fluid that can be used as an energy source for electricity generation. Thus, for example, it is possible to use a hydrogen fuel cell to power all the flight control and communication systems of an aircraft, as well as the on-board lighting and the power supply of various accessory devices used in the aircraft. Liquid hydrogen can also be used as an energy source for the propulsion of an aircraft, by powering a fuel cell or by direct combustion, which has the advantage of only releasing water into the atmosphere. The use of hydrogen requires distribution systems between one or more production or storage tanks and consuming devices. Thus, pipes are conventionally used to convey liquid hydrogen between a storage tank and a liquid hydrogen consuming device such as, for example, a hydrogen fuel cell.

The publication JP 2000 268700 A describes a cryogenic fuse according to the preamble of claim 1. Further similar fuse arrangements are disclosed in the publications RU 2 770 419 Cl, JP S64 39230 A, US 2008/190646 Al and DE 198 46 349 Al.

It is known that there is a need to massively reduce the production of carbon emissions, to safeguard the environment, and electric or hybrid propulsion is showing promise for this. But the conventional systems on board of an aircraft are such that the weight/electrical power ratio is not satisfactory as they are and there is therefore a need to obtain electrical systems making it possible to provide power in relation to their weight to satisfy all the constraints. This is the case for electrical fuses as well as for other aircraft power components.

It is therefore necessary to optimize the electrical power-to-weight ratio of all elements of an aircraft's propulsion system, and in particular those power components through which strong currents flow and which must have a high current breaking capacity.

The situation can be improved.

### SUMMARY OF THE INVENTION

It is an object of the present invention to provide a fuse with a breaking capacity compatible with the current requirements of an electrically propelled aircraft, while having weight and size characteristics compatible with flight constraints.

To this end, it is proposed a cryogenic fuse as set forth in claim 1.

The cryogenic fuse according to the invention may comprise the following features, considered alone or in combination :
- The breaker initiation zone comprises impurities inserted into the superconducting element.
- The breaker initiation zone has a local reduction in the cross-section of the superconducting element.
- The breaker initiation zone has at least one bend in the superconducting element.
- The impurities inserted in the breaking initiation zone are aluminum or copper fragments.
- The superconducting element is in the form of a tape or a strip.
- The first chamber comprises at least one cryogenic fluid inlet opening.
- The additional module for controlling said melting current is configured to control the temperature of the cryogenic fluid present in the first chamber.
- The additional module for controlling said melting current is a controlled electromagnetic field source.

The invention also relates to a power transmission cable comprising a cryogenic fuse integrated into the cable.

Finally, another object of the invention is an aircraft comprising a cryogenic fuse as described above or comprising a power transmission cable as described above.

### BRIEF DESCRIPTION OF THE DRAWINGS

The characteristics of the invention mentioned above, as well as others, will appear more clearly on reading the following description of at least one embodiment, said description being made in relation to the attached drawings, among which:
[Fig. 1] schematically illustrates a cryogenic fuse according to a first embodiment;
[Fig. 2] schematically illustrates a cryogenic fuse according to a second embodiment;
[Fig. 3] schematically illustrates a cryogenic fuse according to a third embodiment;
[Fig. 4] schematically illustrates an aircraft comprising at least a cryogenic fuse as illustrated on Fig. 1, Fig. 2 or Fig. 3;
[Fig. 5] schematically illustrates a cryogenic fuse according to another embodiment; and,
[Fig. 6] schematically illustrates a cryogenic fuse according to another embodiment.

### DETAILED DESCRIPTION OF AT LEAST ONE EMBODIMENT

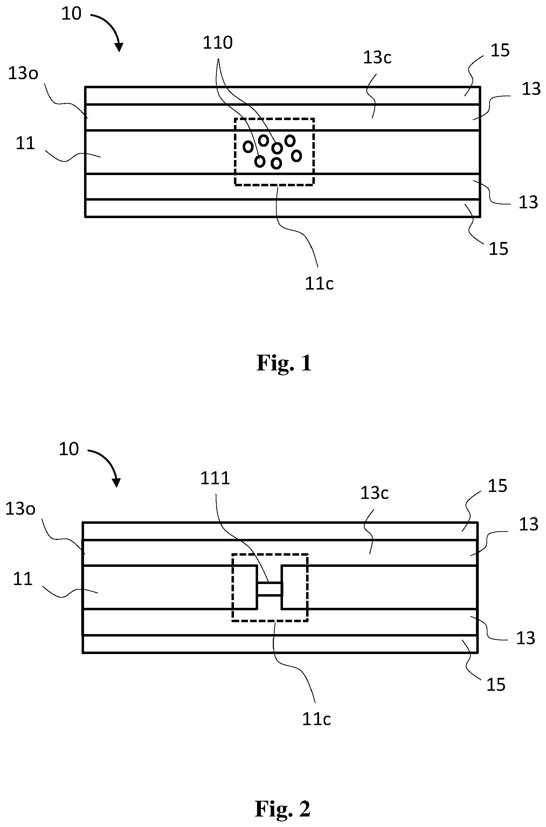

**Fig. 1** illustrates a cryogenic fuse 10 according to a first embodiment. The cryogenic fuse 10 comprises a superconducting element 11 (configured to transmit an electric current). The superconducting element 11 comprises a zone 11c from a superconductor material configured to predefine a melting current of the cryogenic fuse 10, i.e. a current which, when present for a predetermined time, causes the superconducting element 11 to melt, at least in the zone 11c. The zone 11c is referred to herein as the breaking initiation zone, since it is this zone that represents the portion of the superconducting element 10 that is most brittle (or weak) with respect to an overcurrent flowing through the superconducting element 11. As with conventional fuses, the precise characteristics of the breaking initiation zone 11c are not detailed here and it is considered that they are defined by laboratory tests and calibrations or by feedback, before the manufacturing of the cryogenic fuse 10, depending on the currents to be cut, the surrounding conditions, the material used for the superconducting element 11, etc. Therefore, in the present description, it is considered that the cryogenic fuse 10 is configured to open the electrical circuit when a current Imax flows through it for a predetermined time T1. The corresponding Imax and T1 characteristics are further determined for each of the circuits or circuit branches of an aircraft which it is appropriate to be able to electrically isolate from the other circuits in the event of a fault occurring in that circuit or circuit branch. According to this first embodiment, the breaking initiation zone 11c is obtained by inserting impurities 110 in the superconducting element 11, such as copper or aluminum fragments, for instance. Advantageously, the superconducting element 11 is enclosed in a first chamber 13 filled with a cryogenic fluid 13c, such as liquid or gaseous dihydrogen (H2). The cryogenic fluid is introduced by an opening 13o of the first chamber 13, which is then closed when the fuse is made as a standalone component. In order to thermally isolate the first chamber 13 from external temperature, a second chamber 15, placed under vacuum, surrounds the first chamber 13. According to one embodiment, the vacuum in said second chamber 15 is created (obtained) during the manufacture of the fuse. According to an alternative embodiment, the vacuum in the second chamber 15 is obtained prior to powering up the electrical circuit(s) concerned by the cryogenic fuse 10, by means of dedicated equipment such as a vacuum pump. According to an embodiment, the superconducting element 11 is implemented as a standalone component comprising means for connection to a superconductive conductor to be protected by fuse.

Advantageously, and according to another embodiment, the superconducting fuse 10 can be integrated directly into a cryogenic cable also comprising a first chamber arranged around a superconducting conductor and a second chamber, under vacuum, surrounding said cable first chamber. Such a configuration simplifies manufacturing and assembly operations by limiting the number of connection points between a cryogenic fuse and cryogenic power conductors. It also saves a lot of weight.

Furthermore, as the cryogenic fuse 10 is cooled in the same way as the inner conductor of the cryogenic superconducting cable, the DC resistance of the cryogenic fuse 10 is almost zero. As a result, the efficiency gain is very high compared to a conventional fuse since the power loss in the cryogenic fuse is very low.

In addition, the insulation provided by the vacuum second chamber 15 allows the generation of the arc to be controlled after a fault has occurred and the cryogenic fuse 10 has broken. Thus, no additional system or material is required to dampen the effects of the generated arc.

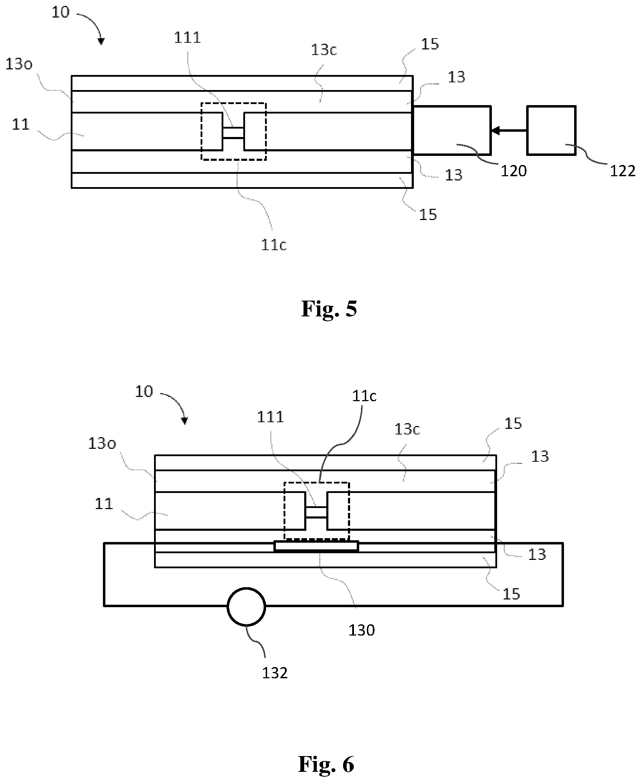

In one embodiment, the first chamber 13 containing the cryogenic fluid 13c may be connected to a cryogenic fluid supply system of the aircraft, at its opening 13o. According to another embodiment represented in Fig. 5, the cryogenic fuse 10 may have a dedicated source of cryogenic fluid 120, such as a cryocooler, connected to the opening 13o of the first chamber 13.

Since the fuse rating requirements are very diverse in aircraft systems, the present invention proposes to have an adjustable value for the fuse current of a given fuse. Advantageously, the melting current of the cryogenic fuse 10 is controlled by monitoring the temperature of the cryogenic fluid present in the first chamber 13. To that end, the cryogenic fluid supply system of the aircraft, or the dedicated source of cryogenic fluid 120, is connected to a module 122 for controlling the temperature of the cryogenic fluid (represented in Fig. 5). In one embodiment represented in Fig. 6, the melting current of the cryogenic fuse 10 is controlled by positioning a magnetic field source 130 (connected to an AC generator 132) in the vicinity of the breaker initiation zone 11c, and the magnetic field generated in this zone allows the melting current to be adjusted. This is particularly advantageous for main circuit branches of an aircraft, considering for example that the total take-off current of the aircraft can be up to three times the nominal current consumed by the same aircraft in cruise flight mode.

It is thus advantageously possible to modulate the breaking current of a fuse of a specific branch of an aircraft circuit as a function of different flight phases such as, for example, take-off, cruise flight, landing or an emergency situation.

**Fig. 2** illustrates a second embodiment of the cryogenic fuse 10, according to which the fracture initiation zone is no longer obtained by inserting impurities in the superconducting material, but by a local reduction 111 in (i.e. a calibrated narrowing of) the cross-section of the superconducting element 10.

The other features remain unchanged.

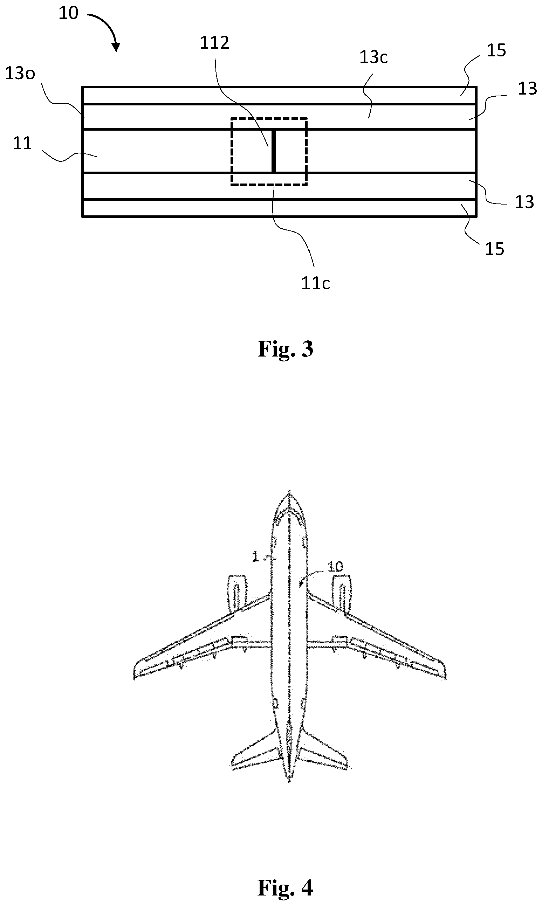

**Fig. 3** illustrates a second embodiment of the cryogenic fuse 10, according to which the breaking initiation zone is no longer obtained by inserting impurities into the superconducting material, but by arranging at least one bend 112 (i.e. one transverse calibrated plus) in the superconducting element 10.

Again, the other features remain unchanged.

Any of the three different embodiments in which the breaking initiation zone is respectively obtained by impurities inserted in the superconducting element, by reduction of the section of the superconducting element 11 or by at least one calibrated bend in the superconducting element 11, in the breaking initiation zone 11c, comprises additional means for controlling and adjusting the melting current or melting time by adjusting the cryogenic fluid temperature, a magnetic field in the breaking initiation zone, or both.

**Fig. 4** illustrates an aircraft 1 which comprises at least one cryogenic fuse as the cryogenic fuse 10, implemented as a standalone component or being part of a cryogenic power circuit, for instance integrated in a cryogenic power cable. This allows to take benefit of the advantages described here-above and related to such a cryogenic fuse, onboard of an aircraft.

## Claims

1. A cryogenic fuse (10) comprising a superconducting element (11) arranged in a first chamber (13), the first chamber (13) containing a cryogenic fluid (13c), wherein:
- said superconducting element (11) includes a breakdown initiation zone (12) configured to determine a melting current,
- said first chamber (13) is surrounded by a second chamber (15), placed under vacuum, **characterized in that**:
- said cryogenic fuse comprises an additional module for adjusting said melting current or for adjusting a melting time of said breakdown initiation zone (12).

2. A cryogenic fuse according to claim 1, wherein said breakdown initiation zone (12) comprises impurities (110) inserted in said superconducting element (11) .

3. A cryogenic device according to claim 2, wherein said impurities (110) are aluminum or copper fragments.

4. A cryogenic fuse according to claim 1, wherein said breakdown initiation zone (12) has a local reduction (111) in the cross-sectional area of the superconducting element (11).

5. A cryogenic fuse according to claim 1, wherein said breakdown initiation zone (12) has at least one bend (112) made in said superconducting element (11).

6. A cryogenic fuse according to any of claims 1 to 5, wherein the superconducting element (11) is in the form of a strip or a tape.

7. A cryogenic fuse according to any of claims 1 to 6, wherein the first chamber (13) comprises at least one inlet opening (13o) for said cryogenic fluid.

8. A cryogenic fuse according to one of claims 1 to 7, wherein said additional module (122) for controlling said melting current is configured to control the temperature of said cryogenic fluid.

9. The cryogenic fuse according to one of claims 1 to 7, wherein said additional module for controlling said melting current is a controlled electromagnetic field source (130).

10. A power transmission cable comprising an integrated cryogenic fuse (10) according to any of claims 1 to 9.

11. An aircraft (1) comprising a cryogenic fuse (10) according to any of claims 1 to 9 or comprising a power transmission cable according to claim 10.

## Patentansprüche

1. Kryogene Sicherung (10), die ein supraleitendes Element (11) umfasst, das in einer ersten Kammer (13) angeordnet ist, wobei die erste Kammer (13) ein kryogenes Fluid (13c) enthält, wobei:
- das supraleitende Element (11) eine Durchbruchinitiierungszone (12) beinhaltet, die konfiguriert ist zum Ermitteln eines Schmelzstroms,
- die erste Kammer (13) von einer zweiten Kammer (15) umgeben ist, die unter ein Vakuum gesetzt ist, **dadurch gekennzeichnet, dass**:
- die kryogene Sicherung ein zusätzliches Modul zum Einstellen des Schmelzstroms oder zum Einstellen einer Schmelzzeit der Durchbruchinitiierungszone (12) umfasst.

2. Kryogene Sicherung nach Anspruch 1, wobei die Durchbruchinitiierungszone (12) Verunreinigungen (110) umfasst, die in das supraleitende Element (11) eingefügt wurden.

3. Kryogene Vorrichtung nach Anspruch 2, wobei die Verunreinigungen (110) Aluminium- oder Kupferfragmente sind.

4. Kryogene Sicherung nach Anspruch 1, wobei die Durchbruchinitiierungszone (12) eine lokale Verringerung (111) der Querschnittsfläche des supraleitenden Elements (11) aufweist.

5. Kryogene Sicherung nach Anspruch 1, wobei die Durchbruchinitiierungszone (12) mindestens eine Biegung (112) aufweist, die in dem supraleitenden Element (11) bereitgestellt wird.

6. Kryogene Sicherung nach einem der Ansprüche 1 bis 5, wobei das supraleitende Element (11) die Form eines Streifens oder eines Bandes aufweist.

7. Kryogene Sicherung nach einem der Ansprüche 1 bis 6, wobei die erste Kammer (13) mindestens eine Einlassöffnung (13o) für das kryogene Fluid umfasst.

8. Kryogene Sicherung nach einem der Ansprüche 1 bis 7, wobei das zusätzliche Modul (122) zum Steuern des Schmelzstroms konfiguriert ist zum Steuern der Temperatur des kryogenen Fluids.

9. Kryogene Sicherung nach einem der Ansprüche 1 bis 7, wobei das zusätzliche Modul zum Steuern des Schmelzstroms eine gesteuerte elektromagnetische Feldquelle (130) ist.

10. Leistungsübertragungskabel, das eine integrierte kryogene Sicherung (10) nach einem der Ansprüche 1 bis 9 umfasst.

11. Flugzeug (1), das eine kryogene Sicherung (10) nach einem der Ansprüche 1 bis 9 umfasst oder ein Leistungsübertragungskabel nach Anspruch 10 umfasst.

## Revendications

1. Fusible cryogénique (10) comprenant un élément supraconducteur (11) agencé dans une première chambre (13), la première chambre (13) contenant un liquide cryogénique (13c), dans lequel :
- ledit élément supraconducteur (11) inclut une zone d'amorçage de claquage (12) configurée pour déterminer un courant de fusion,
- ladite première chambre (13) est entourée par une seconde chambre (15), placée sous vide, **caractérisé en ce que** :
- ledit fusible cryogénique comprend un module supplémentaire pour ajuster ledit courant de fusion ou pour ajuster un temps de fusion de ladite zone d'amorçage de claquage (12).

2. Fusible cryogénique selon la revendication 1, dans lequel ladite zone d'amorçage de claquage (12) comprend des impuretés (110) insérées dans ledit élément supraconducteur (11).

3. Dispositif cryogénique selon la revendication 2, dans lequel lesdites impuretés (110) sont des fragments d'aluminium ou de cuivre.

4. Fusible cryogénique selon la revendication 1, dans lequel ladite zone d'amorçage de claquage (12) a une réduction locale (111) de la superficie de section transversale de l'élément supraconducteur (11).

5. Fusible cryogénique selon la revendication 1, dans lequel ladite zone d'amorçage de claquage (12) a au moins une courbure (112) réalisée dans ledit élément supraconducteur (11).

6. Fusible cryogénique selon de quelconques des revendications 1 à 5, dans lequel l'élément supraconducteur (11) est sous la forme d'une bande ou d'un ruban.

7. Fusible cryogénique selon de quelconques des revendications 1 à 6, dans lequel la première chambre (13) comprend au moins une ouverture d'entrée (13o) pour ledit liquide cryogénique.

8. Fusible cryogénique selon l'une des revendications 1 à 7, dans lequel ledit module supplémentaire (122) pour commander ledit courant de fusion est configuré pour commander la température dudit liquide cryogénique.

9. Fusible cryogénique selon l'une des revendications 1 à 7, dans lequel ledit module supplémentaire pour commander ledit courant de fusion est une source de champ électromagnétique commandée (130).

10. Câble de transmission d'énergie électrique, comprenant un fusible cryogénique intégré (10) selon de quelconques des revendications 1 à 9.

11. Aéronef (1) comprenant un fusible cryogénique (10) selon de quelconques des revendications 1 à 9 ou comprenant un câble de transmission d'énergie électrique selon la revendication 10.
